Europäisches Patentamt

European Patent Office

Office européen des brevets

(19)

(11) **EP 1 480 482 A1**

(12) **EUROPEAN PATENT APPLICATION**

(43) Date of publication:
**24.11.2004 Bulletin 2004/48**

(51) Int Cl.$^7$: **H04Q 7/38**

(21) Application number: **04011885.3**

(22) Date of filing: **19.05.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK** | (72) Inventor: **Ling, LV**<br>**Pudong Jinquiao 201206 Shanghai (CN)** |
| (30) Priority: **22.05.2003 CN 03136933** | (74) Representative:<br>**Dreiss, Fuhlendorf, Steimle & Becker Patentanwälte,**<br>**Postfach 10 37 62**<br>**70032 Stuttgart (DE)** |
| (71) Applicant: **ALCATEL**<br>**75008 Paris (FR)** | |

(54) **Method for dynamically adjusting the capacity of mobile communication system**

(57) The present invention presents a method for dynamically adjusting the capacity of a mobile communication system. In this method, the data rate of the data service can be properly and timely adjusted according to the current system load and the parameters of the system. Considering the integrated effect of the data rate and the service duration, the method that makes the system capacity maximum is reasonable, effective and accurate.

Fig.1

EP 1 480 482 A1

**Description**

FIELD OF THE INVENTION

The present invention relates to the field of mobile communication, and more particularly to a method for dynamically adjusting the capacity of a mobile communication system.

BACKGROUND OF THE INVENTION

CDMA system has the characters of soft capacity, such that the cell capacity can be dynamically adjusted, that is, the load of the cell can be measured. When the cell is overloaded, the dynamic adjustment process can be initiated. Since 3G telecommunications system has the capability for dynamically controlling the channel rate, the object of dynamically adjusting a system capacity can be achieved by changing the data rate.

If the power could not be controlled very well, the power output will be fluctuated with a range of 20% to 30%. Because the transmission power of the high-speed data service is very huge, the fluctuation might be fatal. The power fluctuation does not only affect the data services, but also introduce a big interference source to other users. At present, the transmission quality, i.e., BER, is guaranteed by increasing the transmission power. Increasing the power, however, may not meet the requirement when in the edge of a cell or in deep fading environment. Furthermore, further increasing the transmission power will bring a negative consequence to the system.

In the prior art, when a system is overloaded, it is possible to decrease the system power by decreasing the service rate of the data service under the control of power. Meanwhile, lowing the interference to the system can decrease the system load. But it starts by assuming that the service duration is constant. In fact, decreasing the service rate of data service would increase the service duration simultaneity. Increasing the service duration of the data service, however, will increase the interference duration to other services, and further affects the system capacity. Because the affect of the changing data rate on the service duration is not considered, it is not decided yet whether it is good to increase the system capacity by decreasing the data rate.

We have conducted an analyses on whether decreasing of the service rate of date service can increase the capacity of the system. It is found out that decreasing the service rate will not always increase the system capacity. The existing method for adjusting date rate is on the basis of this. Therefore, the theory for adjusting the data rate is not reliable. This will result in adjusting the data rate too heavy or too small. It will greatly affect the system capacity.

Therefore, on the basis of our analysis and its conclusion, a method for dynamically adjusting the system capacity in a mobile communication system is proposed. This method has changed the common knowledge that the more the date rate is decreased, the more the system capacity is.

SUMMARY OF THE INVENTION

The purpose of the present invention is to provide a method for dynamically adjusting the capacity of a mobile communication system. Considering the integrated effect of the data rate and the service duration simultaneously, the data rate of the data service can be adjusted by this method, such that makes the system capacity maximum.

The method for dynamically adjusting the capacity of a mobile communication system of the present invention comprises the steps of:

> a) the system continually detecting the load of a current cell, and comparing the current load with a load threshold defined by the system;

> b) if the current load is less than the load threshold defined by the system, the service rate of the data service is not adjusted or the service rate is recovered to its original value; if the current load is more than or equal to the load threshold defined by the system, starting the dynamic adjustment on the capacity of the system to adjust the service rate of the data service, after finishing the service.rate adjustment, the system returning to detect the load of a cell.

In the step b), if the current load is more than or equal to the load threshold defined by the system, the step for adjusting the service rate of the data service comprising:

> A) obtaining the system interruption probability and the values of constants $K_0'$ and $\beta$ based on the parameters of the system;

> B) based on the constants $\beta$ and $K_0'$ obtained in step A), obtaining the values of the discrete functions $H_1(n)$, $H_2$

($n$) and $G(n)$, and comparing them with each other;

C) if $H_1(n)>H_2(n)>G(n)$ or $H_2(n)<G (n)<H_1(n)$, measuring the maximum number of users, $K_e$, which satisfying the maximum interruption probability allowed by the system, the expected service rate is

$$R_e = \frac{W(1-\eta)/E_b}{K_e} - \varepsilon$$

, where W denotes system bandwidth,

$$\eta = \frac{N_0}{I_0},$$

$N_0$ is the power density of the background noise, $I_0$ is the maximum receivable power density, $E_b$ is the bit energy of a certain service or a certain type of services needed to be adjusted, $\varepsilon$ is a minor positive number; if $H_2(n)<H_1(n)<G(n)$, the expected service rate $R_e$ is the allowable minimum value $R_{min}$ of the service, i.e. $R_e=R_{min}$.

In the step A) the system interruption probability is given by:

$$P_{out}^r = P_r[\sum_{i=1}^{N} c_i M_i (1+h) > W(1-\eta)]$$ ,

where

$$c_i = \frac{E_{bi}}{I_0} R_i,$$

is the data rate of the ith type of services, $E_{bi}$ is the bit energy of the ith. service type,

$$M_i = \sum_{j=1}^{K_i} SAF_{ij}$$ ,

$SAF_{ij}$ denotes the active state of the ith service type of the jth user, $M_i$ is the user number of the ith service type, which is in active state in the system , h is the overhead channel interference, N is the number of the services in the cell, where $N \geq 2$,

$$P_r[\sum_{i=1}^{N} c_i M_i (1+h) > W(1-\eta)]$$

is the possibility of

$$\sum_{i=1}^{N} c_i M_i (1+h) > W(1-\eta)$$

The system interruption probability with single service is given by

$$P_{out} = e^{-\frac{\beta}{R}} \sum_{k=[K'_0/R]}^{\infty} \frac{(\frac{\beta}{R})^k}{k!} = \begin{cases} 1 & K'_0/R < 1 \\ 1 - e^{-\frac{\beta}{R}} \sum_{k=0}^{[K'_0/R]-1} \frac{(\frac{\beta}{R})^k}{k!} & K'_0/R \geq 1 \end{cases}$$

where $\beta = \rho\lambda\alpha$, $\lambda$ is the service arrival probability, $\rho$ is the service active probability; $\alpha = R_0/\mu_0$, $R_0$ is the initial service rate, $\mu_0$ is the service leaving probability of the service rate $R_0$, $K'_0 = W(1-\eta)/(E_{b1}(1+h))$, h is the overhead channel interference, $E_{b1}$ is the bit energy of the first service; R specifically refers to the data rate of a certain service and a certain type of services that will be adjusted; $k = [K'_0/R]$ denotes the integer of $K'_0/R$.

In the step B), the discrete functions $H_1(n)$ $H_2(n)$ and G(n) are given by

$$H_1(n) = \frac{\beta e^{-\beta n/K'_0}}{K'_0} \cdot \frac{(\beta_n/K'_0)^n}{n!}$$

$$H_2(n) = \frac{\beta e^{-\beta(n+1)/K'_0}}{K'_0} \cdot \frac{(\beta(n+1)/K'_0)^n}{n!}$$

$$G(n) = e^{-\beta n/K'_0} \frac{(\beta n/K'_0)^n}{n!}, n\ 1,2...$$

where $\beta = \rho\lambda\alpha$, $\lambda$ is the service arrival probability, $\rho$ is the service active probability; $\alpha = R_0/\mu_0$, $R_0$ is the initial service rate, $\mu_0$ is the service leaving probability of the service rate $R_0$, $K'_0 = W(1-\eta)/(E_{b1}(1+h))$, h is the overhead channel interference, $E_{b1}$ is the bit energy of the first service, n is the discrete point in $[K'_0/R]-1$ for continue attenuation amplitude of function

$$e^{-\frac{\beta}{R}} \sum_{k=0}^{[K'_0/R]-1} \frac{(\frac{\beta}{R})^k}{k!},$$

R specifically refers to the data rate of a certain service and a certain type of services that will be adjusted; $k = [K'_0/R]$ denotes the integer of $K'_0/R$.

In the step C),the number $\varepsilon$ is within the range of 0 to

$$\frac{W(1-\eta)/E_b}{K_e(K_e+1)}.$$

The method by which the data rate of the data service can be properly and timely adjusted according to the current system load and some parameters of the system is reasonable, effective and accurate. The method also illustrates that the lower rate of the data service would not always generate a better result. In the case of a certain load of the system, the data rate has a best adjusting value. The value may result in a maximum system capacity. In the process of adjustment, the data rate of a certain service or a certain type of services might be adjusted, and some special data service may be prevented from the adjustment.

BRIEF DESCRIPTION ON THE DRAWINGS

The accompanying drawings, which are incorporated in and constitute a part of the specification, illustrate embodiments of the invention and, together with the description, serve to explain the principles of the invention.

Figure 1 is a flow diagram of the present invention; and

Figure 2 is a block diagram of a preferred embodiment of the present invention.

DESCRIPTION OF THE PREFERRED EMBODIMENTS

The preferred embodiments of the present invention will be described in detail in accordance with the accompanying drawings.

In a cell, the message's arrival follows a Poisson distribution. The call service duration of each user follows an exponent distribution. During the infinitesimal time interval $\Delta t$, the signal arrival probability in every time interval is $\lambda \Delta t$. Thus, the probability that the service time t is beyond a certain time T is:

$$\Pr(t>T)=e^{-\mu T}, T>0 \tag{1}$$

,where $\mu$ is the leaving probability of service, so the average call interval is $1/\mu$ second.

By deduction, the relationship between the service rate and the service duration can be obtained, that is, the service rate R is in proportion to the leaving probability $\mu$ in formula (1) : $R=\alpha \cdot \mu$. Where $\alpha$ is given by $\alpha=R_0/\mu_0$, $R_0$ denotes the initial service rate, $\mu_0$ denotes the leaving probability when the initial service rate is Ro.

From the above conclusion, the service rate directly affects on the leaving probability $\mu$. The leaving probability $\mu$ is an important parameter of the interruption probability. So it is impossible to keep other conditions unchanged when changing the service rate. Thus, simply decreasing the service rate cannot enlarge the system capacity. In order to correctly determine the adjusting of the service rate, it is necessary to clearly analyze the relationship between the data rate and the capacity (or the interruption probability).

The affect of the service rate on the system capacity is described as follows. CDMA system is a strict interference limited system. In order to ensure that the service wouldn't be blocked, the following formula must be met.

$$I_0/N_0 < {}^{1/\eta}$$

,where $I_0$ is the maximum received power (i.e. the sum of the maximum received interference power and the useful signal, and normalized by bandwidth), No is the power density of the background noise, and $\eta$ is a constant, which is typically within the range of 0.1 to 0.25.

For the system, the condition for service blocking is given by

$$\sum_{i=1}^{N}\sum_{j=1}^{K_i} SAF_{ij}(1+h)E_{bi}R_i + N_0W > I_0W \tag{2}$$

,where W is the system bandwidth, i.e., spread bandwidth, $N_0$ is the power density of the background noise, $I_0$ is the maximum received power density, N is the total number of service types in a cell ; $K_i$ is the user number of the $i^{th}$ service; $R_i$ is the service data rate of the $i^{th}$ service, $E_{bi}$ is the bit energy of the $i^{th}$ service, where i denotes the $i^{th}$ service type $(i \leq N)$; $SAF_{ij}$ denotes the active state of the $i^{th}$ service type of the $j^{th}$ user , h is the overhead channel interference generated by the synchronization signal which is used to re-setup physical link when the data is transmitted in a discontinued manner.

Let

$$\eta = \frac{N_0}{I_0}, \qquad \frac{E_{bi}}{I_0}R_i = c_i, \qquad M_i = \sum_{j=1}^{K_i} SAF_{ij}$$

,where $M_i$ denotes the user number of the $i^{th}$ service type which is in active state in a system. Assume the probability that the $i^{th}$ service type of the $j^{th}$ user is in active state is $\rho_i$, that is $P_r(SAF_{ij}=1)=\rho_i$, then the probability that the $i^{th}$ service type of the $j^{th}$ user is in non-active state is $P_r(SAF_{ij}=0)=1-\rho=q_i$, where $\rho$ donates the service active probability. Obviously, $M_i$ follows Poisson distribution. Since the services are independent with each other, the formula

$$\sum_{i=1}^{N} c_i M_i$$

also follows Poisson distribution. Thus, the Erlang capability of the system can be expressed by the system interruption probability:

$$P_{out}^r = P_r[\sum_{i=1}^{N} c_i M_i(1+h) > W(1-\eta)]$$

(3)

From the above formula (3), the single service interruption probability could be given by

$$P_{out} = e^{-\frac{\beta}{R}} \sum_{k=[K_0'/R]}^{\infty} \frac{(\frac{\beta}{R})^k}{k!} = \begin{cases} 1 & K_0'/R < 1 \\ 1 - e^{-\frac{\beta}{R}} \sum_{k=0}^{[K_0'/R]-1} \frac{(\frac{\beta}{R})^k}{k!} & K_0'/R \geq 1 \end{cases}$$

(4)

, where $\beta$ and $K_0'$ are constants, $\beta=\rho\lambda\alpha$, $\lambda$ is the service arrival probability, $\rho$ is the service active probability; $\alpha=R_0/\mu_0$, $R_0$ is the initial service rate, $\mu_0$ is the service leaving probability of the data rate $R_0$; $K_0'=W(1-\eta)/(E_{b1}(1+h))$, h is the interference of the overhead channel, $E_{b1}$ is the bit energy of the $1^{st}$ service: R specifically refers to a certain service and a certain service data rate that will be adjusted; $k=[K_0'/R]$ denotes the integer of $K_0'/R$.
From the above, the system Erlang capacity could be expressed by the system interruption probability. Thus, the system interruption probability is an index of the system capability. From the system interruption probability, on the basis of the conclusion and deduction on theory, the affect of the service rate on the system capability can be obtained.
Thus, it is necessary to select a proper service rate R to maximize

$$e^{-\frac{\beta}{R}} \sum_{k=0}^{[K_0'/R]-1} \frac{(\frac{\beta}{R})^k}{k!} \quad ,$$

and then a minimum interruption probability can be obtained. Further, the maximum capacity under a given interruption probability can be obtained.
By analyzing, a discrete function could be given by:

$$H(n) = \frac{\beta e^{-\beta x_n^*}}{K_0'} \frac{(\beta x_n^*)^n}{n!}$$

(5)

,where n is the discrete point in $[K_0/R]-1$ for the continual attenuation amplitude of the function

$$e^{-\frac{\beta}{R}} \sum_{k=0}^{[K_0'/R]-1} \frac{(\frac{\beta}{R})^k}{k!} \; ,$$

and where $x_n^*$ is a point within the continual scope

$$[\frac{n}{K_0'}, \frac{n+1}{K_0'}].$$

Hence, two discrete functions are defined according to the equation (5)

$$H_1(n) = \frac{\beta e^{-\beta n/K_0'}}{K_0'} \cdot \frac{(\beta n/K_0')^n}{n!}$$

$$H_2(n) = \frac{\beta e^{-\beta n+1)/k_0'}}{K_0'} \cdot \frac{(\beta(n+1)/K_0')^n}{n!} \qquad (6)$$

Further, the following formula could be proved:

$$H_2(n) \le H(n) \le H_1(n) \qquad (7)$$

Obviously, both $H_1(n)$ and $H_2(n)$ are of degressive functions of n. Thus, $H(n)$ is also a degressive function of n.
A discrete function is defined by:

$$G(n) = e^{-\beta n/K_0'} \frac{(\beta n/K_0')}{n!} n = 1,2... \qquad (8)$$

The following conclusion can be obtained by comparing the three discrete functions $H_1(n)$ $H_2(n)$ and $G(n)$

1) If $H_1(n) \le G(n)$ for every n, then when $n \to \infty$ i.e. the service rate R $\to$ 0, the system interruption probability will be minimum;

2) If $H_2(n) \ge G(n)$ for every n, then when $n = 1$ i.e. the service rate $R = K_0'$, the system interruption probability will be minimum, and the system capacity achieves the maximum.

By analyzing, a more practical method for adjusting service rate for data service and dynamically increasing the system capacity can be obtained. Some special data service may be prevented from the adjustment. During the adjusting procedure, it is possible to adjust the service rate of a certain data service or a certain type of data services.

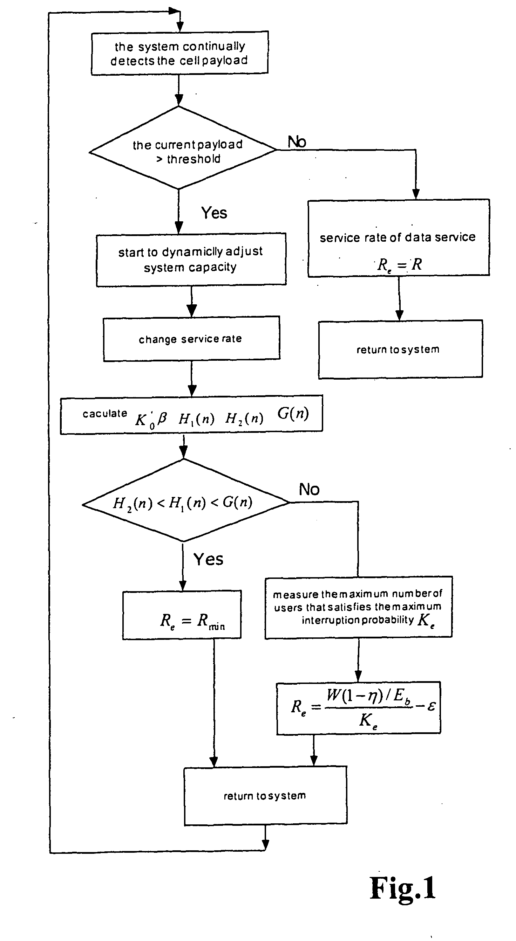

Figure 1 is a flow diagram of the present invention. As shown in figure 1, the method for dynamically adjusting system capacity in the mobile communication system of the present invention comprises the following steps.
First, the system continually detects the load of the current cell, and compares the current load with a load threshold defined by the system;
If the current load is less than the load threshold defined by the system, which means the system is in low load state, 'the service rate of data service is not adjusted or the service rate is recovered to its original value to improve transmission rate.
If the current load is more than or equal to the defined load threshold, which means the system is in heavy load, the dynamic adjustment on the system capacity is started to change the service rate of the data service.
Second, the service rate of the data service is adjusted according to the following method:

a) Obtaining the system interruption probability and the values of constants $K_0'$ and β according to the parameters of the system, where the parameters of the system including the system bandwidth W, the service arrival probability λ, the service active probability ρ, the service rate R, the service leaving probability μ, the interference of overhead channel h, the power density of background noise $N_0$, and the parameter η etc.

In theory, the system interruption probability could be given by formula. For a system with a single service, the system interruption probability could be obtained by formula (4), and for a system with two services, the system interruption probability could be obtained by:

$$P_{out}^r = P_r[c_1 M_1 + c_2 M_2 > \frac{W(1-\eta)}{1+h}]$$

$$= 1 - \sum_{i=1}^{\lfloor W(1-\eta)/c_1(1+h) \rfloor} [\sum_{j=\lceil [\frac{W(1-\eta)}{1+h}-c_1 i]/c_2 \rceil}^{\lfloor W(1-\eta)/c_2(1+h) \rfloor} \frac{(\lambda_2 \rho_2/\mu_2)^j}{j!} e^{-(\frac{\lambda_2 \rho_2}{\mu_2})}] \frac{(\frac{\lambda_1 \rho_1}{\mu_1})^i}{i!} e^{-(\frac{\lambda_1 \rho_1}{\mu_1})}$$

In practice, the system interruption probability could be given by simulation.

The system interruption probability provides the theory foundation for the present invention. Based on the theory foundation, the present invention deduces a practical method for adjusting the service rate. In practice, it is not necessary to get the system interruption probability at every moment but only needed to know whether the system is overload.

β=ρλα, λ is the service arrival probability, ρ is the service active probability; $\alpha=R_0/\mu_0$, $R_0$ is the initial service rate, $\mu_0$ is the service leaving probability corresponding to the service rate of $R_0$; $K_0 =W(1-\eta)/(E_{b1}(1+h))$, h is the interference of the overhead channel, $E_{b1}$ is the bit energy of the first service; R specifically refers to the data rate of a certain service and a certain type of services that will be adjusted; $k =[K_0'/R]$ denotes the integer of $K_0'/R$.

b)Based on the constants β and $K_0'$ obtained in step a) and in accordance with equations (6) and (8), obtaining the value of the three discrete functions $H_1(n)$, $H_2(n)$ and $G(n)$ ,then comparing them with each other;

Obviously, formula (7) can be obtained by deduction. Formula (7) indicates that the discrete functions $H_1(n)$, $H_2(n)$ are degressive functions of n . Hence,
if $H_2(n)<H_1(n)<G(n)$, according to the above conclusion 1), it is known that when service rate R→0, the system interruption probability is minimum and the system capacity is infinite. In practice, because of the limitation of the service itself, the service rate can not be decreased freely. However, through properly decreasing the service rate, the interruption probability could be decreased and the system capacity could be improved. Let the service rate $R_e$ be the allowable minimum of the service rate $R_{min}$, i.e. $R_e= R_{min}$. In this situation, the maximum system capacity is maximum and the system interruption probability is minimal. The minimal system interruption probability is the limit of the adjustment. If at the moment the statistical interruption probability is still greater than the defined system interruption probability, it means the requirement of the defined system interruption probability cannot met by service rate adjustment, and the system capacity cannot be improved any more. After the service rate of the data service is adjusted, it returns to the system.
If $H_1(n)>H_2(n)>G(n)$ or $H_2(n)<G (n) < H_1(n)$, then it is known from the above conclusion (2) that when service rate $R \rightarrow K_0'$, the system interruption probability is minimum. If at the moment $P_{out} > P_e$ , where $P_e$ denotes the defined system interruption probability, it is necessary to increase the service rate to decrease the interruption probability and the system capacity; if $P_{out} <P_e$, then it is necessary to decrease the service rate to increase the interruption probability and the system capacity, In practice, for maximum system capacity i.e. the maximum number of user which satisfies the requirement of the expected interruption probability, the corresponding expected service rate $R_e$ should be on the utmost right of

$$[\frac{W(1-\eta)/E_b}{K_e+1}, \frac{W(1-\eta)/E_b}{K_e}],$$

i.e.

$$R_e = \frac{W(1-\eta)/E_b}{K_e} - \varepsilon$$

where $\varepsilon$ is a minor positive number satisfying

$$0 < \varepsilon < \frac{W(1-\eta)/E_b}{K_e(K_e+1)},$$

the number $\varepsilon$ is within the range of

$$0 \text{ to } \frac{W(1-\eta)/E_b}{K_e(K_e+1)},$$

$E_b$ specifically refers to the bit energy of a certain service or a certain type of services that will be adjusted. After adjusting the data rate, it returns to the system.

When finishing the adjustment of the service rate of the data service, it returns to detect the cell load again. If the current load is less than the threshold defined by the system, in order to improve the transmission rate, the service rate is not adjusted anymore. Or the service rate is recovered to its original value.

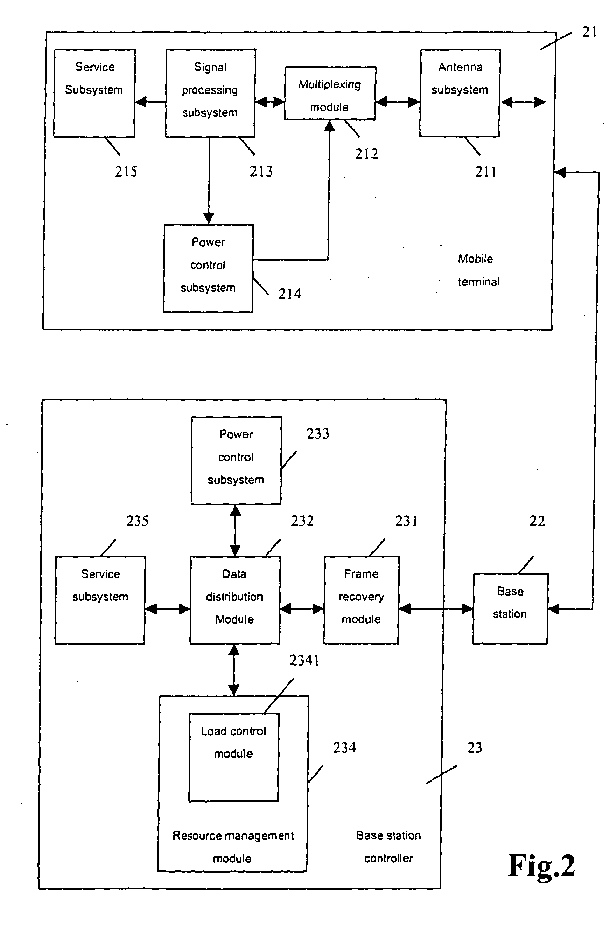

Figure 2 is a block diagram of a preferred embodiment of the present invention. As shown in figure 2, a antenna subsystem 211 of a mobile terminal 21 receives a pilot signal of a forward link from a base station 22, and delivers it to a multiplexing module 212. The multiplexing module 212 separates the forward frequency signal and delivers it to a signal processing subsystem 213. The signal processing subsystem 213 delivers the processed signal to a power control subsystem 214. The power control subsystem 214 measures the quality of the received signal and generates a measurement report. The measurement report together with a feedback link signal is delivered to the base station 22 via the multiplexing module 212 and the antenna subsystem 211.

At the base station 22, the signal is multiplexed and processed, then delivered to the base station controller 23. During the information processing, when frame processing is undergone in the base band processing module, the user's SIR can be obtained. The user's SIR is compared with the expected SIR. The mobile terminal 21 changes the transmission power according to the comparison result.

In the base station controller 23, a frame recovery module 231 outputs data to a data distribution module 232, which distributes three outputs to a power control subsystem 233, a resource management module 234 and a service subsystem 235 respectively. The load control module 2341 of the resource management module 234 detects the status of the system load continually according to the message from the base station, and compares the current system load with the upper limit of the load defined by the system. If the detected system load is greater than the defined upper limit, the service rate of a certain data service or a certain type of data services in the resource management module is adjusted in accordance with the present invention. If the detected system load is less than the defined upper limit, the service rate of a certain data service or a certain type of data services in the resource management module is adjusted in accordance with the present invention, such that the adjusted service rate remains in or recovers to the original service rate of the data service.

As many apparently widely different embodiments of the present invention can be made without departing from the spirit and scope thereof, it is to be understood that the invention is not limited to the specific embodiments thereof except as defined in the appended claims.

**Claims**

1.    A method for dynamically adjusting the capacity of a mobile communication system, **characterized in that** the method comprising the steps of:

a) the system continually detecting the load of a current cell, and comparing the current load with a load threshold defined by the system; and

b) if the current load is less than the load threshold defined by the system, the service rate of the data service is not adjusted or the service rate is recovered to its original value; if the current load is more than or equal to the load threshold defined by the system, starting the dynamic adjustment on the capacity of the system to adjust the service rate of the data service, after finishing the service rate adjustment, the system returning to detect the load of a cell.

**2.** The method according to claim 1, further **characterized in that** in the step b), if the current load is more than or equal to the load threshold defined by the system, the step for adjusting the service rate of the data service comprising:

A) obtaining the system interruption probability and the values of constants $K_0^{'}$ and $\beta$ based on the parameters of the system;

B) based on the constants $\beta$ and $K_0^{'}$ obtained in step A), obtaining the values of the discrete functions $H_1 (n)$, $H_2 (n)$ and $G(n)$ , and comparing them with each other; and

C) if $H_1 (n) > H_2 (n) > G(n)$ or $H_2 (n) < G (n) < H_1 (n)$, measuring the maximum number of users, $K_e$, which satisfying the maximum interruption probability allowed by the system, the expected service rate is

$$R_e = \frac{W(1\text{-}\eta)/E_b}{K_e}\text{-}\varepsilon,$$

where W denotes system bandwidth,

$$\eta = \frac{N_0}{I_0},$$

$N_0$ is the power density of the background noise, $I_0$ is the maximum receivable power density, $E_b$ is the bit energy of a certain service or a certain type of services needed to be adjusted, $\varepsilon$ is a minor positive number; if $H_2(n) < H_1(n) < G (n)$ the expected service rate $R_e$ is the allowable minimum value $R_{min}$ of the service, i.e. $R_e = R_{min}$ .

**3.** The method according to claim 2, further **characterized in that** in the step A) the system interruption probability is given by:

$$P_{out}^r = P_r[\sum_{i=1}^{N} c_i M_i (1+h) > W(1-\eta)]$$

where

$$c_i = \frac{E_{bi}}{I_0} R_i,$$

$R_0$ , is the data rate of the $i^{th}$ type of services, $E_{bi}$ is the bit energy of the $i^{th}$ service type,

$$M_i = \sum_{j=1}^{K_i} SAF_{ij}$$

SAFij denotes the active state of the $i^{th}$ service type of the $j^{th}$ user, $M_i$ is the user number of the $i^{th}$ service type, which is in active state in the system , h is the overhead channel interference, N is the number of the services in the cell, where $N \geq 2$,

$$P_r[\sum_{i=1}^{N} c_i M_i (1+h) > W(1-\eta)]$$

is the possibility of

$$\sum_{i=1}^{N} c_i M_i (1+h) > W(1-\eta)$$

4. The method according to claim 3, further **characterized in that** the system interruption probability with single service is given by

$$P_{out} = e^{-\frac{\beta}{R}} \sum_{k=[K_0'/R]}^{\infty} \frac{(\frac{\beta}{R})^k}{k!} = \begin{cases} 1 & K_0'/R < 1 \\ 1 - e^{-\frac{\beta}{R}} \sum_{k=0}^{[K_0'/R]-1} \frac{(\frac{\beta}{R})^k}{k!} & K_0'/R \geq 1 \end{cases}$$

where $\beta=\rho\lambda\alpha$, $\lambda$ is the service arrival probability, $\rho$ is the service active probability; $\alpha=R_0/\mu_0$, $R_0$ is the initial service rate, $\mu_0$ is the service leaving probability of the service rate $R_0$, $K_0' =W(1-\eta)/(E_{b1}(1+h))$, h is the overhead channel interference, $E_{b1}$ is the bit energy of the first service; R specifically refers to the data rate of a certain service and a certain type of services that will be adjusted; $k =[K_0'/R]$ denotes the integer of $K_0'/R$.

5. The method according to claim 2, further **characterized in that** in the step B), the discrete functions $H_1$ (n) $H_2$(n) and G(n) are given by

$$H_1(n)=\frac{\beta e^{-\beta n/K_0'}}{K_0'} \cdot \frac{(\beta n/K_0')^n}{n!}$$

$$H_2(n) = \frac{\beta e^{-\beta(n+1)/K_0'}}{K_0'} \cdot \frac{(\beta(n+1)/K_0')^n}{n!}$$

$$G(n) = e^{-\beta n/K_0'} \frac{(\beta n/K_0')^n}{n!}, n = 1,2...$$

where $\beta=\rho\lambda\alpha$, $\lambda$ is the service arrival probability, $\rho$ is the service active probability; $\alpha=R_0/\mu_0$, $R_0$ is the initial service rate, $\mu_0$ is the service leaving probability of the service rate $R_0$, $K_0'=W(1-\eta)/(E_{b1}(1+h))$, h is the overhead channel interference, $E_{b1}$ is the bit energy of the first service, n is the discrete point in $[K_0'/R]-1$ for continue attenuation amplitude of function

$$e^{-\frac{\beta}{R}[K_0'/R]-1} \sum_{k=0} \frac{(\frac{\beta}{R})^k}{k!} \quad ,$$

R specifically refers to the data rate of a certain service and a certain type of services that will be adjusted; k =[$K_0$/R] denotes the integer of $K_0'/R$.

6. The method according to claim 2, further **characterized in that** in the step C),the number $\varepsilon$ is within the range of

$$0 \text{ to } \frac{W(1-\eta)/E_b}{K_e(K_e+1)}.$$

```
                    ┌─────────────────────────┐
              ┌────▶│  the system continually │
              │     │  detects the cell payload│
              │     └─────────────────────────┘
              │                  │
              │                  ▼
              │            ╱─────────────╲                No
              │          ╱  the current    ╲──────────────────────────┐
              │         ╲   payload         ╱                          │
              │          ╲  > threshold   ╱                            │
              │            ╲─────────────╱                             ▼
              │                  │ Yes                     ┌────────────────────────┐
              │                  ▼                         │ service rate of data   │
              │     ┌─────────────────────────┐           │ service                │
              │     │  start to dynamiclly     │           │      R_e = R           │
              │     │  adjust system capacity  │           └────────────────────────┘
              │     └─────────────────────────┘                        │
              │                  │                                      ▼
              │                  ▼                         ┌────────────────────────┐
              │     ┌─────────────────────────┐           │    return to system    │
              │     │   change service rate    │           └────────────────────────┘
              │     └─────────────────────────┘
              │                  │
              │                  ▼
              │     ┌─────────────────────────┐
              │     │ caculate K'_0 β H_1(n)   │
              │     │      H_2(n)  G(n)        │
              │     └─────────────────────────┘
              │                  │
              │                  ▼
              │            ╱─────────────╲                No
              │          ╱                 ╲──────────────────────┐
              │         ╲ H_2(n)<H_1(n)<G(n) ╱                     │
              │          ╲                 ╱                       ▼
              │            ╲─────────────╱          ┌──────────────────────────┐
              │                  │ Yes              │ measure the maximum number│
              │                  ▼                  │ of users that satisfies   │
              │     ┌──────────────────┐            │ the maximum interruption  │
              │     │  R_e = R_min     │            │ probability K_e           │
              │     └──────────────────┘            └──────────────────────────┘
              │                  │                               │
              │                  │                               ▼
              │                  │                  ┌──────────────────────────┐
              │                  │                  │  R_e = W(1-η)/E_b / K_e -ε│
              │                  │                  └──────────────────────────┘
              │                  │                               │
              │                  ▼                               ▼
              │         ┌────────────────────────────────────────────┐
              │         │            return to system               │
              │         └────────────────────────────────────────────┘
              │                              │
              └──────────────────────────────┘
```

the system continually detects the cell payload

the current payload > threshold — No / Yes

start to dynamiclly adjust system capacity

service rate of data service
$$R_e = R$$

return to system

change service rate

caculate $K'_0$ $\beta$ $H_1(n)$ $H_2(n)$ $G(n)$

$H_2(n) < H_1(n) < G(n)$ — No / Yes

$$R_e = R_{\min}$$

measure the maximum number of users that satisfies the maximum interruption probability $K_e$

$$R_e = \frac{W(1-\eta)/E_b}{K_e} - \varepsilon$$

return to system

**Fig.1**

Fig.2

EP 1 480 482 A1

European Patent
Office

EUROPEAN SEARCH REPORT

Application Number

EP 04 01 1885

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2002/193118 A1 (HOLTZMAN JACK M ET AL) 19 December 2002 (2002-12-19) | 1 | H04Q7/38 |
| A | * abstract * * page 1, paragraph 9-11 * * page 2, paragraph 26 - page 3, paragraph 37; figure 2 * | 2-6 | |
| A | EP 1 139 581 A (QUALCOMM INC) 4 October 2001 (2001-10-04) * the whole document * | 1-6 | |
| A | EP 1 100 283 A (CIT ALCATEL) 16 May 2001 (2001-05-16) * abstract * * column 1, paragraph 5 - column 2, paragraph 13 * | 1-6 | |

TECHNICAL FIELDS
SEARCHED    (Int.Cl.7)

H04Q

The present search report has been drawn up for all claims

| Place of search | Date of completion of the search | Examiner |
|---|---|---|
| Munich | 11 August 2004 | Isopescu, C |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

15

## ANNEX TO THE EUROPEAN SEARCH REPORT
## ON EUROPEAN PATENT APPLICATION NO.

EP 04 01 1885

This annex lists the patent family members relating to the patent documents cited in the above-mentioned European search report.
The members are as contained in the European Patent Office EDP file on
The European Patent Office is in no way liable for these particulars which are merely given for the purpose of information.

11-08-2004

| Patent document cited in search report | | Publication date | Patent family member(s) | | Publication date |
|---|---|---|---|---|---|
| US 2002193118 | A1 | 19-12-2002 | CA | 2449616 A1 | 19-12-2002 |
| | | | EP | 1397875 A1 | 17-03-2004 |
| | | | TW | 566015 B | 11-12-2003 |
| | | | WO | 02101956 A1 | 19-12-2002 |
| EP 1139581 | A | 04-10-2001 | US | 5604730 A | 18-02-1997 |
| | | | EP | 1139581 A2 | 04-10-2001 |
| | | | AT | 270475 T | 15-07-2004 |
| | | | AU | 701510 B2 | 28-01-1999 |
| | | | AU | 3003195 A | 22-02-1996 |
| | | | BR | 9508428 A | 23-12-1997 |
| | | | CA | 2195984 A1 | 08-02-1996 |
| | | | CN | 1375942 A | 23-10-2002 |
| | | | CN | 1375952 A | 23-10-2002 |
| | | | CN | 1162376 A ,B | 15-10-1997 |
| | | | DE | 69533224 D1 | 05-08-2004 |
| | | | EP | 0774179 A1 | 21-05-1997 |
| | | | FI | 970319 A | 13-03-1997 |
| | | | IL | 114703 A | 06-12-1998 |
| | | | JP | 10503337 T | 24-03-1998 |
| | | | JP | 3078330 B2 | 21-08-2000 |
| | | | WO | 9603813 A1 | 08-02-1996 |
| | | | ZA | 9505843 A | 15-03-1996 |
| EP 1100283 | A | 16-05-2001 | EP | 1100283 A1 | 16-05-2001 |

EPO FORM P0459

For more details about this annex : see Official Journal of the European Patent Office, No. 12/82

16